# EUROPEAN PATENT APPLICATION

(11) **EP 3 672 047 A1**
(43) Date of publication of application: **24.06.2020**
(21) Application number: 18213921.2
(22) Date of filing: 19.12.2018
(51) Int. Cl.: H02M 1/12, H02M 1/44, H01F 27/24, H02M 1/00, H01F 27/33, H01F 30/06, H05B 41/282, H01F 27/06

(54) **COUPLED INDUCTOR COMPONENT WITH INTEGRATED CURRENT BALANCING TRANSFORMER**

(71) Applicant: Danmarks Tekniske Universitet, 2800 Kgs. Lyngby (DK)
(72) Inventor: Ouyang, Ziwei, 2880 Bagsværd (DK); Dou, Yi, 2800 Kgs. Lyngby (DK); Andersen, Michael Andreas Esbern, 3200 Helsinge (DK)
(74) Representative: Høiberg P/S

(57) **Abstract**

The present disclosure relates to a coupled inductor component with integrated current balancing transformer comprising: a magnetically permeable core comprising: a base member and a top member, the base member and top member extending in horizontal planes; first (A), second (B), third (C) and fourth (D) legs arranged substantially perpendicular relative to the base and top member and arranged between the base and top members; first and second directly coupled main windings (L1, L2); first and second reversely coupled current-balancing windings (L3, L4) wound around the fourth (D) and third (C) legs, respectively, wherein the first and second current-balancing windings (L3, L4) are serially connected to the first and second directly coupled main windings (L1, L2), the first and second reversely coupled current-balancing windings (L3, L4) forming a current balancing transformer, wherein a first return path of the first current-balancing winding (L3) and a second return path of the second current-balancing winding (L4) are arranged orthogonally to the first main winding (L1) and the second main winding (L2), respectively, or: a first main winding (L1); first and second reversely coupled current-balancing windings (L3, L4) wound around the fourth (D) and third (C) legs, respectively, wherein the first and second current-balancing windings (L3, L4) are serially connected to the first main winding (L1), the first and second reversely coupled current-balancing windings (L3, L4) forming a current balancing transformer, wherein a first return path of the first current-balancing winding (L3) and a second return path of the second current-balancing winding (L4) are arranged orthogonally to the first main winding (L1).

## Description

The present disclosure relates to a coupled inductor component with integrated current balancing transformer in a single magnetic core. The disclosure further relates to a buck DC-DC converter and an electromagnetic interference filter comprising a coupled inductor component.

### Background of invention

Many electronic devices are powered with a direct current (DC) voltage. Many such devices require voltage regulation of the power supply to function properly and reliably. A DC-to-DC converter is an electronic circuit that converts a source of direct current (DC) from one voltage level to another. Switching converters (such as buck converters) provide much greater power efficiency as DC-to-DC converters than linear regulators.

Two-phase or multi-phase DC-DC converters are often used in high current power applications to lower the current stress in each component. In this way, the overall efficiency of the converter may be increased compared to a single-phase converter.

However, there are also drawbacks associated with using two or more phases in DC-DC converters. One disadvantage is that multiple inductors are needed, which means that the size of the converter becomes larger. A second disadvantage is that there will typically be unbalanced current in the phases due to mismatched impedance of the two or more inductors and of the circuit paths. This may cause a serious circulating current and decrease the overall efficiency. Uneven current distribution may cause inductor saturation, uneven thermal stresses, degraded converter performance, and even failure of the converter.

One solution for operating a two-phase or multi-phase DC-DC converter is to operate in an interleaved mode, where one inductor is operated at a time. However, the interleaved mode required complex control and need additional components and power supply to realize, which increases the overall power loss and reduces the overall power density.

Working in synchronous mode, i.e. where the inductors may be active at the same time, would be preferable since the control is significantly less complex and the inductance is higher, but it has, as described above, the issue of unbalanced currents.

### Summary of invention

The present disclosure relates to a coupled inductor component with a current balancing transformer integrated into a single magnetically permeable core. In a first embodiment the magnetically permeable core comprises:
- a base member and a top member, the base member and top member extending in horizontal planes; and
- first (A), second (B), third (C) and fourth (D) legs arranged substantially perpendicular relative to the base and top member and arranged between the base and top members.

In a first embodiment the coupled inductor component with integrated current balancing transformer further comprises:
- first and second directly coupled main windings (L1, L2);
- first and second reversely coupled current-balancing windings (L3, L4) wound around the fourth (D) and third (C) legs, respectively, wherein the first and second current-balancing windings (L3, L4) are serially connected to the first and second directly coupled main windings (L1, L2), the first and second reversely coupled current-balancing windings (L3, L4) forming a current balancing transformer,
wherein a first return path of the first current-balancing winding (L3) and a second return path of the second current-balancing winding (L4) are arranged orthogonally to the first main winding (L1) and the second main winding (L2), respectively.

Alternatively, the coupled inductor component with integrated current balancing transformer further comprises:
- a first main winding (L1);
- first and second reversely coupled current-balancing windings (L3, L4) wound around the fourth (D) and third (C) legs, respectively, wherein the first and second current-balancing windings (L3, L4) are serially connected to the first main winding (L1), the first and second reversely coupled current-balancing windings (L3, L4) forming a current balancing transformer,
wherein a first return path of the first current-balancing winding (L3) and a second return path of the second current-balancing winding (L4) are arranged orthogonally to the first main winding (L1).

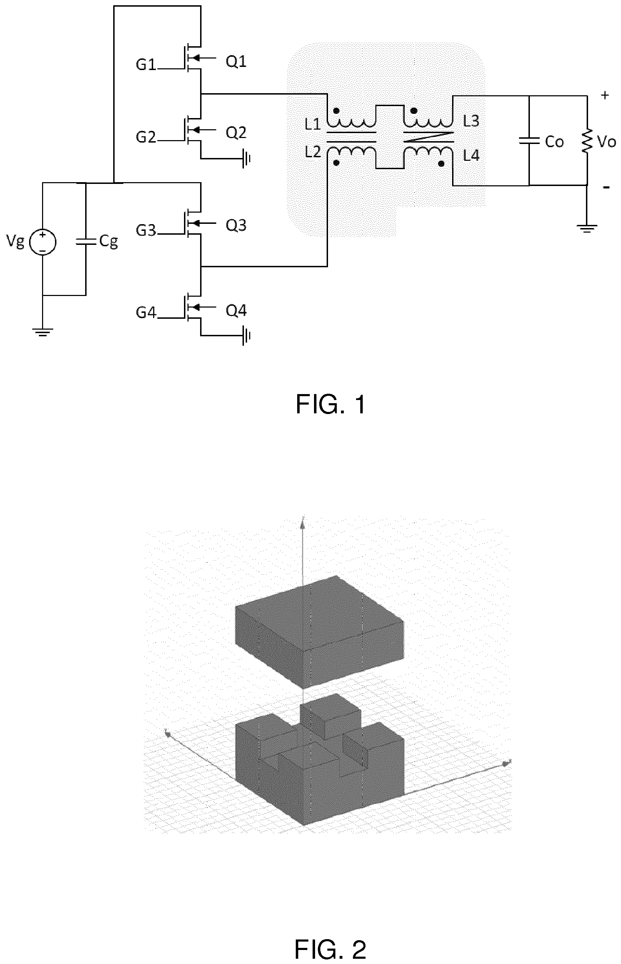

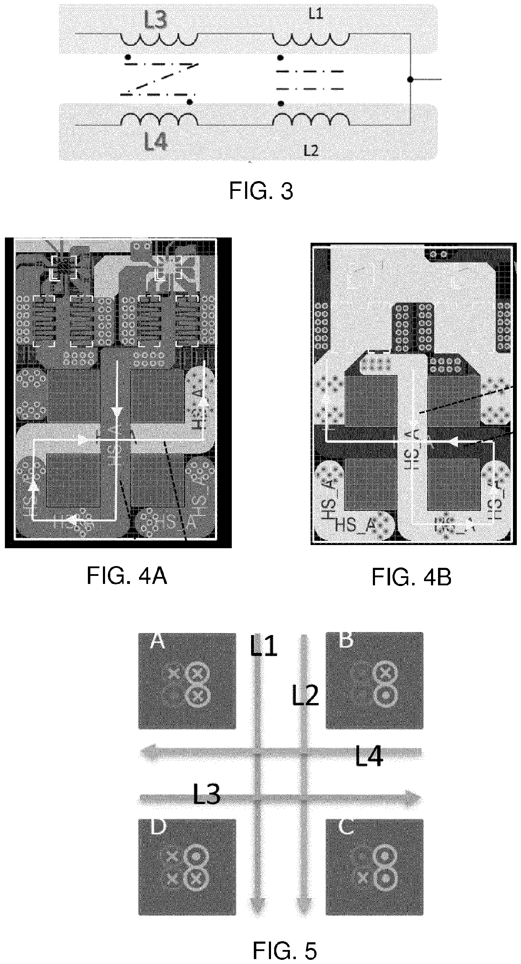

Fig. 1 shows an example of a two-phase buck converter having first and second directly coupled main windings (L1, L2) connected to first and second reversely coupled current-balancing windings (L3, L4) constituting the current-balancing transformer. Fig. 2 shows an example of the magnetically permeable core (cross-core) having four legs (A, B, C, D). Fig. 4 and 5 show examples of the physical arrangements of the windings

The presently disclosed coupled inductor component with a current balancing transformer integrated into a single magnetically permeable core presents several advantages. The currents that would be unbalanced in conventional configurations in the two or more phases are balanced in the presently disclosed configuration by means of the arrangements of the windings in the magnetically permeable core. The coupled inductor component thus has inherent current balancing. Further advantages of the presently disclosed coupled inductor component with integrated current balancing transformer include high inductance density and low loss.

The return paths of the first current-balancing winding (L3) and the second current-balancing winding (L4) are preferably arranged orthogonally to the first main winding (L1) the second main winding (L2). The main windings and reversely coupled current-balancing windings thereby generate flux paths which are not influenced by each other. Moreover, if the return paths of the first current-balancing winding (L3) and the second current-balancing winding (L4) are arranged such that their respective currents flow in opposite directions, their effect on the legs are cancelled. The presently disclosed coupled inductor component can be operated in synchronous mode, which requires significantly less complex control compared to a design operating in interleaving mode. The presently disclosed design allows synchronous mode without generating unbalanced currents.

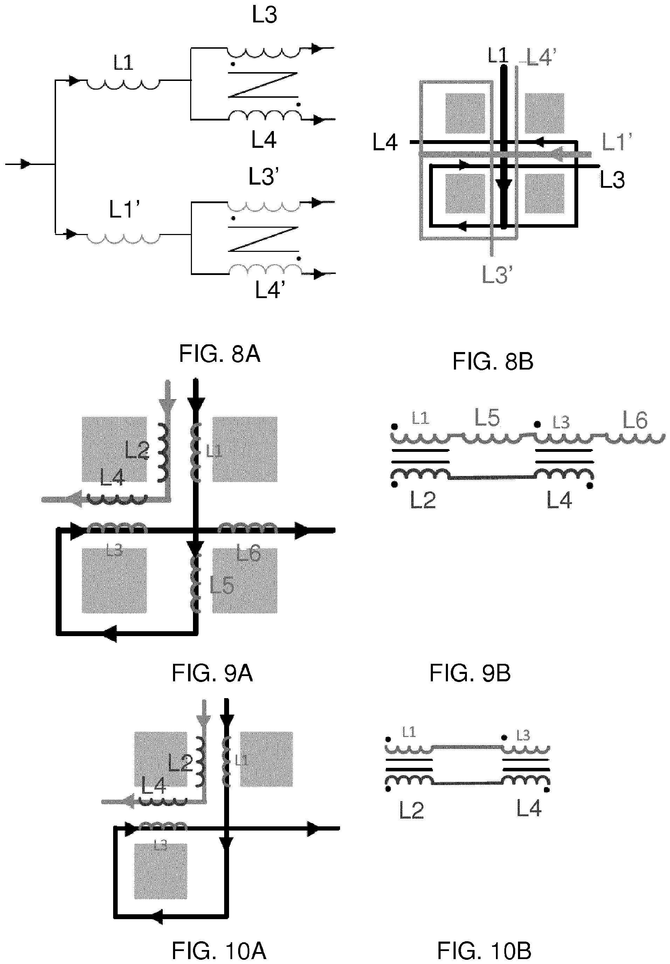

In a further embodiment, the described inventive concept is applied to a magnetically permeable core having three legs. In this embodiment the first (A), second (B) and third (C) legs are arranged substantially perpendicular relative to the base and top member. As in the four-leg version, the component may comprise first and second directly coupled main windings (L1, L2); and first and second reversely coupled current-balancing windings (L3, L4), wherein the first and second current-balancing windings (L3, L4) are serially connected to the first and second directly coupled main windings (L1, L2). A first return path of the first current-balancing winding (L3) and a second return path of the second current-balancing winding (L4) may be arranged orthogonally to the first main winding (L1) the second main winding (L2), respectively. An example of a three-leg component is shown in fig. 10.

The present disclosure further relates to a buck DC-DC converter comprising a coupled inductor component with integrated current balancing as described. Two-phase or multi-phase DC-DC converters are typical applications which can benefit from using the presently disclosed coupled inductor component with integrated current balancing transformer.

The present disclosure further relates to an electromagnetic interference filter comprising a coupled inductor component with integrated current balancing as described.

### Description of drawings

**Fig. 1** shows an example of a two-phase buck converter with a schematic embodiment of the presently disclosed coupled inductor component with integrated current balancing transformer.
**Fig. 2** shows an embodiment of a magnetically permeable cross-core, which may be used as core in the presently disclosed coupled inductor component.
**Fig. 3** shows an embodiment of first and second directly coupled main windings (L1, L2) with serially connected first and second reversely coupled current-balancing windings (L3, L4).
**Figs. 4A and 4B** show current flow in the four windings in a prototype of a circuit implementation.
**Fig. 5** shows an embodiment of windings structure (L1, L2, L3, L4) and the generated magnetic flux in the legs (A, B, C, D).
**Fig. 6** shows two independent flux flows (forward, differential) generated by the windings in the magnetic core. Two of the legs have air gaps (1).
**Figs. 7A-B** illustrates a further embodiment of the coupled inductor component with integrated current balancing transformer using a single main inductor.
**Figs. 8A-B** illustrates a further embodiment of the coupled inductor component in the form of a four-phase component with integrated current balancing transformer.
**Figs. 9A-B** illustrates a further embodiment of the coupled inductor component using additional fifth and sixth windings.
**Figs. 10A-B** shows an embodiment of the presently disclosed coupled inductor component with integrated current balancing transformer implemented in a magnetically permeable core having three legs.
**Fig. 11** shows the waveform of gate signals of two phases, current and flux for an embodiment of the coupled inductor component.

### Detailed description of the invention

The present disclosure relates to a coupled inductor component with integrated current balancing transformer. The component has a magnetically permeable core comprising:
- a base member and a top member, the base member and top member extending in horizontal planes;
- first (A), second (B), third (C) and fourth (D) legs arranged substantially perpendicular relative to the base and top member and arranged between the base and top members.

In a first embodiment, the coupled inductor component comprises first and second directly coupled main windings (L1, L2); and first and second reversely coupled current-balancing windings (L3, L4). The first and second current-balancing windings (L3, L4) may be serially connected to the first and second directly coupled main windings (L1, L2) as shown in fig. 1. By integrating the windings in a single magnetically permeable core and arranging the windings such that current is automatically balanced in the two phases, a new coupled inductor with integrated current-balancing is achieved.

In one embodiment the first and second reversely coupled current-balancing windings (L3, L4) are wound around the fourth (D) and third (C) legs, respectively, wherein the first and second current-balancing windings (L3, L4) are serially connected to the first and second directly coupled main windings (L1, L2). In this embodiment, a first return path of the first current-balancing winding (L3) and a second return path of the second current-balancing winding (L4) are arranged orthogonally to the first main winding (L1) and the second main winding (L2), respectively.

In a second embodiment, there are three windings. In this embodiment there are a first main winding (L1); and first and second reversely coupled current-balancing windings (L3, L4). The first and second reversely coupled current-balancing windings (L3, L4) may be wound around fourth (D) and third (C) legs, respectively. In this embodiment a first return path of the first current-balancing winding (L3) and a second return path of the second current-balancing winding (L4) may be arranged orthogonally to the first main winding (L1).

Preferably, all the main winding(s) and current-balancing windings are integrated into a single magnetically permeable core, thereby forming the coupled inductor component with integrated current balancing transformer. Preferably, the magnetically permeable core is made of a material having high magnetic permeability, such as a ferromagnetic material.

The orthogonal windings eliminate the proximity effect between the adjacent conductors and thus decrease the high frequency resistance of the windings. The main windings (L1 and L2) and the current-balancing windings (L3 and L4) provide different flux paths which are not being influenced by each other meaning they are decoupled.

### Arrangement of windings, flux paths

In one embodiment the first return path of the first current-balancing winding (L3) is arranged opposite to the second return path of the second current-balancing winding (L4). An example of such a configuration is shown in fig. 5. The return path of L3 and L4 are arranged opposite to each other. The return path of L3 in this case is a straight line (wire) from a point somewhere between legs A and D exiting the core between legs B and C. The return path of L4 is a straight line (wire) from a point somewhere between legs B and C exiting the core between legs A and D. Alternatively, this can be expressed as that the first return path of the first current-balancing winding (L3) and the second return path of the second current-balancing winding (L4) are arranged in the magnetically permeable core such that a first current flows in the first current-balancing winding (L3) and a second current flows in the second current-balancing winding (L4), wherein the first and second currents flow in opposite directions. In this way the contributions of L3 and L4 cancel each other. Thus, the first return path of the first current-balancing winding (L3) and the second return path of the second current-balancing winding (L4) may be arranged such that they at least partly cancel each other's contribution to magnetic flux generated in the legs of the magnetically permeable core.

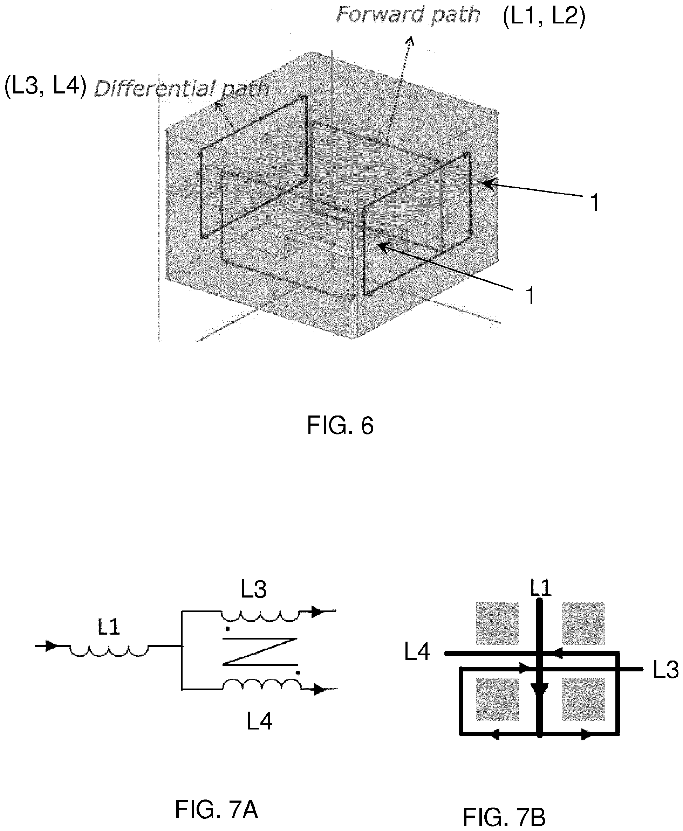

The presently disclosed couple inductor component may be configured such that a first magnetic flux generated from current(s) in the main winding(s) (L1, optionally L2) is independent and not influenced by a second magnetic flux generated from currents in the current-balancing windings (L3, L4). This can be achieved by first and second current-balancing windings (L3, L4) arranged orthogonally to the first main winding (L1) and optionally the second main winding (L2). Fig. 6 shows the two independent flux paths: forward path (main inductors) and differential path (current-balancing windings, if there is unbalanced current). It can be seen that air gaps are present in two of the legs. By having air gaps in two legs, the energy storing capability of the inductor can be improved. The differential path loop not having air gaps will typically then have better current balancing.

In one embodiment of the presently disclosed coupled inductor component, the first main winding (L1) is wound around the first leg (A) or the first leg (A) and the fourth leg (D). Fig. 5 illustrates how a wire passes the first leg (A) and continues to the fourth leg (D), wherein the first current-balancing winding (L3) is wound around the fourth leg (D). Any number of turns is possible, including a single turn. Similarly, the second main winding (L2) may be wound around the second leg (B) or the second leg (B) and the third leg (C). In the example of fig. 5 a wire passes the second leg (B) and continues to the third leg (C), wherein the second current-balancing winding (L4) is wound around the third leg (C). Fig. 5 also shows the magnetic flux distribution generated by the wires.

Each of the first and second directly coupled main windings (L1, L2) and first and second current-balancing windings (L3, L4) may be attached to one of the first (A), second (B), third (C) and fourth (D) legs.

### Two-phase and multi-phase coupled inductor component and buck DC-DC converter

Two-phase DC-DC converters are widely used in power electronics applications due to their advantages over single-phase converters. The advantages include reduced current stress. The load is shared between two or more phases, which reduces the stress on the components.

Fig. 1 illustrates a two-phase coupled inductor component. In this configuration the presently disclosed coupled inductor component is configured to operate using two phases, wherein a first phase corresponds to the first main winding (L1) and the first current-balancing winding (L3) and the second phase corresponds to the second main winding (L2) and the second current-balancing winding (L4). Alternately, with the configuration of fig. 7A, the first phase corresponds to the first main winding (L1) and the first current-balancing winding (L3) whereas the second phase corresponds to the first main winding (L1) and the second current-balancing winding (L4).

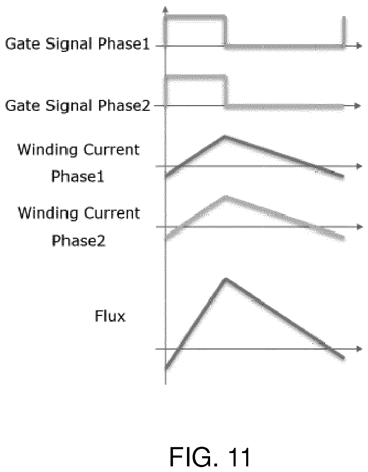

One of the ideas of the presently disclosed coupled inductor component is that it can be operated in synchronous mode with integrated current balancing. Operating in synchronous mode with a two-phase coupled inductor component means that the two (or more) phases can be controlled using a common gate signal. Therefore, in one embodiment the coupled inductor component is configured such that the two phases are active at the same time using a common gate signal. This implementation requires less complex control and since the currents of the phases are inherently balanced, the overall implementation becomes very efficient both due to the integration of all components in one core and due to the simple control of the gating signal. Fig. 11 shows the key-waveform of current and flux for the implementation of fig. 1.

It is also possible to design the coupled inductor component using more than two phases, for example four phases. Fig. 8A-B show such an embodiment, wherein two parallel two-phase implementations are used to create four phases. As can be seen, the L1 wire is split into L3 and L4, which are wound around legs C and D with return paths in opposite directions. In one embodiment of the presently disclosed coupled inductor component with integrated current balancing the coupled inductor component is configured to operate using at least four phases, wherein the coupled inductor component further comprises two parallel paths, each path having two phases, wherein a first path comprises the first main winding (L1) and the first and second reversely coupled current-balancing windings (L3, L4), and wherein a second path comprises secondary first main winding (L1') and the first and second reversely coupled current-balancing windings (L3', L4'). The second branch can be implemented as the first, i.e. using a secondary first main winding (L1'); and secondary first and second reversely coupled current-balancing windings (L3', L4'), wherein a third return path of the secondary first current-balancing winding (L3') and a fourth return path of the secondary second current-balancing winding (L4') are arranged orthogonally to the secondary first main winding (L1').

Further embodiments are possible. In addition to the first and second directly coupled main windings (L1, L2); and first and second reversely coupled current-balancing windings (L3, L4) of the first embodiment, the coupled inductor component may further comprise a third main winding (L5) connected between the first main winding (L1) and the first reversely coupled current-balancing windings (L3) and a third reversely coupled winding (L6) connected to the first current-balancing winding (L3). This embodiment, with its winding configuration in the magnetically permeable core, is shown in figs. 9A-B.

### Core shapes and winding configurations

The magnetically permeable core may take different shapes. A cross-core as showed in fig. 2 is one type of possible core. The first (A), second (B), third (C) and fourth (D) legs of the magnetically permeable core may form an inner cross-shaped space. In one embodiment the first (A), second (B), third (C) and fourth (D) legs have substantially square-shaped cross-sections. Alternatively, the legs may have substantially circular cross sections, substantially triangular cross sections or any other suitable shape of the cross sections of the legs.

The windings of the presently disclosed coupled inductor component with integrated current balancing transformer may have several turns, only one turn, or in principle just passing a leg sufficiently close to generate a magnetic flux in the leg. Figs. 4A-B and fig. 5 illustrate the idea of the invention. In fig. 5 a first conductive wire enters the inner cross-shaped space from a side defined by the first leg (A) and the second leg (B), i.e. the upper side of the core in the figure. The wire extends in the cross-shaped space towards the lower side of the core, i.e. the outer boundary defined by legs C and D. The wire makes a turn around leg D, extends in the cross-shaped space towards the right side of the core, i.e. the outer boundary defined by legs B and C, which is the return path of the first current-balancing winding (L3). In the example, the second phase is mirrored to the first phase. This means that a second conductive wire enters the inner cross-shaped space from a side defined by the first leg (A) and the second leg (B), i.e. the upper side of the core in the figure. The wire extends in the cross-shaped space towards the lower side of the core, i.e. the outer boundary defined by legs C and D. The wire makes a turn around leg C, extends in the cross-shaped space towards the left side of the core, i.e. the outer boundary defined by legs A and D, which is the return path of the second current-balancing winding (L4).

In this embodiment the first conductive wire constitutes the first main winding (L1) and the first current-balancing winding (L3), whereas the second conductive wire constitutes the second main winding (L2) and the second current-balancing winding (L4).

### Air gaps

The magnetically permeable core of the coupled inductor component with integrated current balancing is made of a material having high magnetic permeability, such as a ferromagnetic material. In the event that the magnetically permeable core is made of a high magnetic permeability, some of the legs may have air gaps. It may be useful that two of the legs, such as the first leg (A) and the fourth leg (D), or the second leg (B) and the third leg (C), or the first leg (A) and the third leg (C), or the second leg (B) and the fourth leg (D), or the first leg (A) and the second leg (B), or the third leg (C) and the fourth leg (D), have air gaps. Fig. 6 shows a particularly useful arrangement of air gaps. In this configuration only two legs have air gaps. The differential path loop not having air gaps will typically have better current balancing, whereas the air gaps may prevent core saturation.

In another embodiment the magnetically permeable core of the coupled inductor component with integrated current balancing is made of a material having low magnetic permeability. In this embodiment the air gaps may not be needed.

### Triangular core

The presently disclosed coupled inductor component with integrated current balancing may alternatively be implemented using further arrangements, applying the same inventive concept. In one embodiment, the component is implemented in a core having three legs instead of four. The three-leg arrangement can be denoted a triangular core. This embodiment comprises:
- a magnetically permeable core comprising:
   ∘ a base member and a top member, the base member and top member extending in horizontal planes;
   ∘ first (A), second (B) and third (C) legs arranged substantially perpendicular relative to the base and top member and arranged between the base and top members;
- first and second directly coupled main windings (L1, L2);
- first and second reversely coupled current-balancing windings (L3, L4), wherein the first and second current-balancing windings (L3, L4) are serially connected to the first and second directly coupled main windings (L1, L2),
wherein a first return path of the first current-balancing winding (L3) and a second return path of the second current-balancing winding (L4) are arranged orthogonally to the first main winding (L1) the second main winding (L2), respectively.

An example of this arrangement is shown in figs. 10A-B. As can be seen, it is possible to arrange the first return path of the first current-balancing winding (L3) and the second return path of the second current-balancing winding (L4) orthogonally to the first main winding (L1) and the second main winding (L2), respectively, using only three legs. Preferably, the first return path of the first current-balancing winding (L3) is arranged opposite to the second return path of the second current-balancing winding (L4) in the same way as is possible in the first embodiment of the four-leg arrangement (shown in fig. 5).

### Buck DC-DC converter

The present disclosure further relates to a buck DC-DC converter comprising a coupled inductor component with integrated current balancing as described above. An example of a topology of a two-phase buck converter is shown in fig. 1. Preferably, the buck DC-DC converter is configured to operate in synchronous mode, in particular operating the coupled inductor component in synchronous mode. The buck DC-DC converter may thus comprise control circuitry for controlling a gate signal which is common for the two or more phases of the coupled inductor component. The buck DC-DC converter is preferably a two-phase buck DC-DC converter or a multi-phase buck DC-DC converter. In addition to the coupled inductor component, the buck DC-DC converter may, as would be understood by a person skilled in the art, comprise further components, such as a number of active switches, an input capacitor and an output capacitor, as can be seen in fig. 1

### Detailed description of drawings

The invention will in the following be described in greater detail with reference to the accompanying drawings. The drawings are exemplary and are intended to illustrate some of the features of the presently disclosed coupled inductor component and buck DC-DC converter, and are not to be construed as limiting to the presently disclosed invention.
Fig. 1 shows an example of a two-phase buck converter with a schematic embodiment of the presently disclosed coupled inductor component with integrated current balancing transformer. An input voltage V_{g} is converted to an output voltage Vₒ. The circuit has an input capacitor C_{g} and an output Cₒ, a coupled inductor component with integrated current balancing transformer and four switches with gate signals for controlling a switched mode operation of the coupled inductor component.
Fig. 2 shows an embodiment of a magnetically permeable cross-core, which may be used as core in the presently disclosed coupled inductor component. The core has a base member, a top member, and four legs with substantially square-shaped cross-sections. The legs form an inner cross-shaped space.
Fig. 3 shows an embodiment of first and second directly coupled main windings (L1, L2) with serially connected first and second reversely coupled current-balancing windings (L3, L4). The first directly coupled main winding (L1) and the first current-balancing winding (L3) constitute a first phase. The second directly coupled main winding (L2) and the second current-balancing winding (L4) constitute a second phase.
Figs. 4A and 4B show current flow in the four windings in a prototype of a circuit implementation. Fig. 4A represents the first phase and fig. 4B represents the second phase. The return path of the first phase is opposite relative to the return path of the second phase.
Fig. 5 shows an embodiment of windings structure (L1, L2, L3, L4) and the generated magnetic flux in the legs (A, B, C, D). For each leg there are four contributions, corresponding to the four windings. The well-known right hand rule can be used to derive the relationship between the magnetic flux in the legs and the current in the windings.
Fig. 6 shows two independent flux flows (forward, differential) generated by the windings in the magnetic core. Two of the legs have air gaps (1). The current balancing will typically occur in the two legs not having air gaps. This may be the third and fourth legs (C and D).
Figs. 7A-B show a further embodiment of the coupled inductor component with integrated current balancing transformer using a single main inductor. The current in the single main inductor (L1) is split into L3 and L4, which are wound around legs C and D with return paths in opposite directions.
Figs. 8A-B show a further embodiment of the coupled inductor component in the form of a four-phase component with integrated current balancing transformer, comprising two parallel branches of the embodiment of fig. 7. The current in the single main inductor (L1) is split into L3 and L4, which are wound around legs C and D with return paths in opposite directions. The current in the single main inductor (L1') is split into L3' and L4', which are wound around legs A and D with return paths in opposite directions. The arrangements of the two branches are orthogonal.
Figs. 9A-B illustrates a further embodiment of the coupled inductor component using additional fifth (L5) and sixth (L6) windings. The third main winding (L5) is inserted between the first main winding (L1) and the first reversely coupled current-balancing winding (L3). The third reversely coupled winding (L6) is connected to the first current-balancing winding (L3).
Figs. 10A-B shows an example of a triangular core having only three legs. In this embodiment the first return path of the first current-balancing winding (L3) and the second return path of the second current-balancing winding (L4) are orthogonal to the first main winding (L1) and the second main winding (L2), respectively. The first return path of the first current-balancing winding (L3) is also arranged opposite to the second return path of the second current-balancing winding (L4).
Fig. 11 shows the waveform of gate signals of two phases, current and flux for an embodiment of the coupled inductor component. It can be seen that the gate signals for the two phase are synchronous.

### Further details of the invention

1. A coupled inductor component with integrated current balancing transformer comprising:
   - a magnetically permeable core comprising:
      ∘ a base member and a top member, the base member and top member extending in horizontal planes;
      ∘ first (A), second (B), third (C) and fourth (D) legs arranged substantially perpendicular relative to the base and top member and arranged between the base and top members;
   - first and second directly coupled main windings (L1, L2);
   - first and second reversely coupled current-balancing windings (L3, L4) wound around the fourth (D) and third (C) legs, respectively, wherein the first and second current-balancing windings (L3, L4) are serially connected to the first and second directly coupled main windings (L1, L2), the first and second reversely coupled current-balancing windings (L3, L4) forming a current balancing transformer,
   wherein a first return path of the first current-balancing winding (L3) and a second return path of the second current-balancing winding (L4) are arranged orthogonally to the first main winding (L1) and the second main winding (L2), respectively,
   or:
   - a first main winding (L1);
   - first and second reversely coupled current-balancing windings (L3, L4) wound around the fourth (D) and third (C) legs, respectively, wherein the first and second current-balancing windings (L3, L4) are serially connected to the first main winding (L1), the first and second reversely coupled current-balancing windings (L3, L4) forming a current balancing transformer,
   wherein a first return path of the first current-balancing winding (L3) and a second return path of the second current-balancing winding (L4) are arranged orthogonally to the first main winding (L1).
2. The coupled inductor component with integrated current balancing according to any of the preceding items, wherein all the main winding(s) and current-balancing windings are integrated into a single magnetically permeable core, thereby forming the coupled inductor component with integrated current balancing transformer.
3. The coupled inductor component with integrated current balancing according to any of the preceding items, wherein the first return path of the first current-balancing winding (L3) is arranged opposite to the second return path of the second current-balancing winding (L4).
4. The coupled inductor component with integrated current balancing according to item 3, wherein the first return path of the first current-balancing winding (L3) and the second return path of the second current-balancing winding (L4) are arranged in the magnetically permeable core such that a first current flows in the first current-balancing winding (L3) and a second current flows in the second current-balancing winding (L4), wherein the first and second currents flow in opposite directions.
5. The coupled inductor component with integrated current balancing according to any of items 3-4, wherein the first return path of the first current-balancing winding (L3) and the second return path of the second current-balancing winding (L4) are arranged such that they at least partly cancel their contribution to magnetic flux generated in the legs of the magnetically permeable core.
6. The coupled inductor component with integrated current balancing according to any of the preceding items, wherein the component is configured such that a first magnetic flux generated from current(s) in the main winding(s) (L1, optionally L2) is independent and not influenced by a second magnetic flux generated from currents in the current-balancing windings (L3, L4).
7. The coupled inductor component with integrated current balancing according to any of the preceding items, wherein the component is configured such that he main winding(s) (L1, optionally L2) generate a flux having a forward path and the current-balancing windings (L3, L4) generate a flux having a differential path.
8. The coupled inductor component with integrated current balancing according to any of the preceding items, wherein the main winding(s) (L1, optionally L2) and the current-balancing windings (L3, L4) are decoupled.
9. The coupled inductor component with integrated current balancing according to any of the preceding items, wherein the coupled inductor component is configured to operate using at least two phases, wherein a first phase corresponds to the first main winding (L1) and the first current-balancing winding (L3) and the second phase corresponds to the second main winding (L2) and the second current-balancing winding (L4), or wherein a first phase corresponds to the first main winding (L1) and the first current-balancing winding (L3) and the second phase corresponds to the first main winding (L1) and the second current-balancing winding (L4).
10. The coupled inductor component with integrated current balancing according to item 9, configured such that the two phases are active at the same time using a common gate signal.
11. The coupled inductor component with integrated current balancing according to any of the preceding items, wherein the coupled inductor component is configured to operate using at least four phases, wherein the coupled inductor component further comprises two parallel paths, each path having two phases, wherein a first path comprises the first main winding (L1) and the first and second reversely coupled current-balancing windings (L3, L4), and wherein a second path comprises secondary first main winding (L1') and the first and second reversely coupled current-balancing windings (L3', L4').
12. The coupled inductor component with integrated current balancing according to item 11, wherein a third return path of the secondary first current-balancing winding (L3') and a fourth return path of the secondary second current-balancing winding (L4') are arranged orthogonally to the secondary first main winding (L1').
13. The coupled inductor component with integrated current balancing according to any of the preceding items, further comprising a third main winding (L5) connected between the first main winding (L1) and the first reversely coupled current-balancing windings (L3) and a third reversely coupled winding (L6) connected to the first current-balancing winding (L3).
14. The coupled inductor component with integrated current balancing according to any of the preceding items, wherein the first main winding (L1) is wound around the first leg (A) and the fourth leg (D).
15. The coupled inductor component with integrated current balancing according to any of the preceding items, wherein the second main winding (L2) is wound around the second leg (B) and the third leg (C).
16. The coupled inductor component with integrated current balancing according to any of the preceding items, wherein each of the first and second directly coupled main windings (L1, L2) and first and second current-balancing windings (L3, L4) is attached to one of the first (A), second (B), third (C) and fourth (D) legs.
17. The coupled inductor component with integrated current balancing according to any of the preceding items, wherein first (A), second (B), third (C) and fourth (D) legs have substantially square-shaped cross-sections or substantially circular cross sections or substantially triangular cross sections.
18. The coupled inductor component with integrated current balancing according to any of the preceding items, wherein first (A), second (B), third (C) and fourth (D) legs of the magnetically permeable core form an inner cross-shaped space.
19. The coupled inductor component with integrated current balancing according to item 18, wherein a first conductive wire enters the inner cross-shaped space from a side defined by the first leg (A) and the second leg (B).
20. The coupled inductor component with integrated current balancing according to any of items 18-19, wherein the first conductive wire exits the inner cross-shaped space from a side defined by the second leg (B) and the third leg (C).
21. The coupled inductor component with integrated current balancing according to any of items 18-20, wherein a second conductive wire enters the inner cross-shaped space from a side defined by the first leg (A) and the second leg (B).
22. The coupled inductor component with integrated current balancing according to any of items 18-21, wherein the second conductive wire exits the inner cross-shaped space from a side defined by the first leg (A) and the fourth leg (D).
23. The coupled inductor component with integrated current balancing according to any of items 19-22, wherein the first conductive wire constitutes the first main winding (L1) and the first current-balancing winding (L3).
24. The coupled inductor component with integrated current balancing according to any of items 19-23, wherein the second conductive wire constitutes the second main winding (L2) and the second current-balancing winding (L4).
25. The coupled inductor component with integrated current balancing according to any of the preceding items, wherein the magnetically permeable core is made of a material having high magnetic permeability, such as a ferromagnetic material.
26. The coupled inductor component with integrated current balancing according to any of the preceding items, wherein two of the legs, such as the first leg (A) and the fourth leg (D), or the second leg (B) and the third leg (C), or the first leg (A) and the third leg (C), or the second leg (B) and the fourth leg (D), or the first leg (A) and the second leg (B), or the third leg (C) and the fourth leg (D), have air gaps.
27. The coupled inductor component with integrated current balancing according to any of the preceding items, wherein the first (A), second (B), third (C) and fourth (D) legs have air gaps.
28. The coupled inductor component with integrated current balancing according to any of the preceding items, wherein the magnetically permeable core is made of a material having low magnetic permeability.
29. A coupled inductor component with integrated current balancing comprising:
   - a magnetically permeable core comprising:
      ∘ a base member and a top member, the base member and top member extending in horizontal planes;
      ∘ first (A), second (B) and third (C) legs arranged substantially perpendicular relative to the base and top member and arranged between the base and top members;
   - first and second directly coupled main windings (L1, L2);
   - first and second reversely coupled current-balancing windings (L3, L4), wherein the first and second current-balancing windings (L3, L4) are serially connected to the first and second directly coupled main windings (L1, L2),
   wherein a first return path of the first current-balancing winding (L3) and a second return path of the second current-balancing winding (L4) are arranged orthogonally to the first main winding (L1) and the second main winding (L2), respectively.
30. The coupled inductor component according to item 29, wherein the first return path of the first current-balancing winding (L3) is arranged opposite to the second return path of the second current-balancing winding (L4).
31. A buck DC-DC converter comprising a coupled inductor component with integrated current balancing according to any of the preceding items.
32. The buck DC-DC converter according to item 31, configured to operate in synchronous mode.
33. The buck DC-DC converter according to any of items 31-32, wherein the buck DC-DC converter is a two-phase buck DC-DC converter.
34. The buck DC-DC converter according to any of items 31-32, the converter further comprising a number of active switches, an input capacitor and an output capacitor.
35. An electromagnetic interference filter comprising a coupled inductor component with integrated current balancing according to any of items 1-30.

## Claims

1. A coupled inductor component with integrated current balancing transformer comprising:
- a magnetically permeable core comprising:
∘ a base member and a top member, the base member and top member extending in horizontal planes;
∘ first (A), second (B), third (C) and fourth (D) legs arranged substantially perpendicular relative to the base and top member and arranged between the base and top members;
- first and second directly coupled main windings (L1, L2);
- first and second reversely coupled current-balancing windings (L3, L4) wound around the fourth (D) and third (C) legs, respectively, wherein the first and second current-balancing windings (L3, L4) are serially connected to the first and second directly coupled main windings (L1, L2), the first and second reversely coupled current-balancing windings (L3, L4) forming a current balancing transformer,
wherein a first return path of the first current-balancing winding (L3) and a second return path of the second current-balancing winding (L4) are arranged orthogonally to the first main winding (L1) and the second main winding (L2), respectively,
or:
- a first main winding (L1);
- first and second reversely coupled current-balancing windings (L3, L4) wound around the fourth (D) and third (C) legs, respectively, wherein the first and second current-balancing windings (L3, L4) are serially connected to the first main winding (L1), the first and second reversely coupled current-balancing windings (L3, L4) forming a current balancing transformer,
wherein a first return path of the first current-balancing winding (L3) and a second return path of the second current-balancing winding (L4) are arranged orthogonally to the first main winding (L1).

2. The coupled inductor component with integrated current balancing according to any of the preceding claims, wherein all the main winding(s) and current-balancing windings are integrated into a single magnetically permeable core, thereby forming the coupled inductor component with integrated current balancing transformer.

3. The coupled inductor component with integrated current balancing according to any of the preceding claims, wherein the first return path of the first current-balancing winding (L3) is arranged opposite to the second return path of the second current-balancing winding (L4).

4. The coupled inductor component with integrated current balancing according to claim 3, wherein the first return path of the first current-balancing winding (L3) and the second return path of the second current-balancing winding (L4) are arranged in the magnetically permeable core such that a first current flows in the first current-balancing winding (L3) and a second current flows in the second current-balancing winding (L4), wherein the first and second currents flow in opposite directions.

5. The coupled inductor component with integrated current balancing according to any of claims 3-4, wherein the first return path of the first current-balancing winding (L3) and the second return path of the second current-balancing winding (L4) are arranged such that they at least partly cancel their contribution to magnetic flux generated in the legs of the magnetically permeable core.

6. The coupled inductor component with integrated current balancing according to any of the preceding claims, wherein the component is configured such that a first magnetic flux generated from current(s) in the main winding(s) (L1, optionally L2) is independent and not influenced by a second magnetic flux generated from currents in the current-balancing windings (L3, L4).

7. The coupled inductor component with integrated current balancing according to any of the preceding claims, wherein the main winding(s) (L1, optionally L2) and the current-balancing windings (L3, L4) are decoupled.

8. The coupled inductor component with integrated current balancing according to any of the preceding claims, wherein the coupled inductor component is configured to operate using at least two phases, wherein a first phase corresponds to the first main winding (L1) and the first current-balancing winding (L3) and the second phase corresponds to the second main winding (L2) and the second current-balancing winding (L4), or wherein a first phase corresponds to the first main winding (L1) and the first current-balancing winding (L3) and the second phase corresponds to the first main winding (L1) and the second current-balancing winding (L4).

9. The coupled inductor component with integrated current balancing according to claim 8, configured such that the two phases are active at the same time using a common gate signal.

10. The coupled inductor component with integrated current balancing according to any of the preceding claims, wherein the coupled inductor component is configured to operate using at least four phases, wherein the coupled inductor component further comprises two parallel paths, each path having two phases, wherein a first path comprises the first main winding (L1) and the first and second reversely coupled current-balancing windings (L3, L4), and wherein a second path comprises secondary first main winding (L1') and the first and second reversely coupled current-balancing windings (L3', L4'), wherein a third return path of the secondary first current-balancing winding (L3') and a fourth return path of the secondary second current-balancing winding (L4') are arranged orthogonally to the secondary first main winding (L1').

11. The coupled inductor component with integrated current balancing according to any of the preceding claims, wherein two of the legs, such as the first leg (A) and the fourth leg (D), or the second leg (B) and the third leg (C), or the first leg (A) and the third leg (C), or the second leg (B) and the fourth leg (D), or the first leg (A) and the second leg (B), or the third leg (C) and the fourth leg (D), have air gaps.

12. A coupled inductor component with integrated current balancing comprising:
- a magnetically permeable core comprising:
∘ a base member and a top member, the base member and top member extending in horizontal planes;
∘ first (A), second (B) and third (C) legs arranged substantially perpendicular relative to the base and top member and arranged between the base and top members;
- first and second directly coupled main windings (L1, L2);
- first and second reversely coupled current-balancing windings (L3, L4), wherein the first and second current-balancing windings (L3, L4) are serially connected to the first and second directly coupled main windings (L1, L2),
wherein a first return path of the first current-balancing winding (L3) and a second return path of the second current-balancing winding (L4) are arranged orthogonally to the first main winding (L1) and the second main winding (L2), respectively.

13. The coupled inductor component according to claim 12, wherein the first return path of the first current-balancing winding (L3) is arranged opposite to the second return path of the second current-balancing winding (L4).

14. A buck DC-DC converter comprising a coupled inductor component with integrated current balancing according to any of the preceding claims.

15. An electromagnetic interference filter comprising a coupled inductor component with integrated current balancing according to any of claims 1-13.
